(19) Europäisches Patentamt
European Patent Office
Office européen des brevets

(11) EP 2 494 522 B1

(12) EUROPÄISCHE PATENTSCHRIFT

(45) Veröffentlichungstag und Bekanntmachung des Hinweises auf die Patenterteilung:
06.03.2013 Patentblatt 2013/10

(51) Int Cl.:
*G01P 5/00* (2006.01)      *G06T 7/00* (2006.01)

(21) Anmeldenummer: 10803042.0

(86) Internationale Anmeldenummer:
PCT/EP2010/007494

(22) Anmeldetag: 09.12.2010

(87) Internationale Veröffentlichungsnummer:
WO 2011/076346 (30.06.2011 Gazette 2011/26)

(54) **VERFAHREN ZUR BESTIMMUNG EINES SATZES VON OPTISCHEN ABBILDUNGSFUNKTIONEN FÜR DIE 3D-STRÖMUNGSMESSUNG**

METHOD FOR DETERMINING A SET OF OPTICAL IMAGING FUNCTIONS FOR THREE-DIMENSIONAL FLOW MEASUREMENT

PROCÉDÉ PERMETTANT DE DÉTERMINER UN ENSEMBLE DE FONCTIONS DE REPRODUCTION OPTIQUES POUR LA MESURE DE FLUX EN 3D

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 23.12.2009 DE 102009060580

(43) Veröffentlichungstag der Anmeldung:
05.09.2012 Patentblatt 2012/36

(73) Patentinhaber: LaVision GmbH
37081 Göttingen (DE)

(72) Erfinder: WIENEKE, Bernhard
37085 Göttingen (DE)

(74) Vertreter: Schneider, Peter Christian et al
Fiedler, Ostermann & Schneider
Patentanwälte
Obere Karspüle 41
37073 Göttingen (DE)

(56) Entgegenhaltungen:
DE-A1-102006 055 746

• RALPH LINDKEN ET AL: "Stereoscopic micro particle image velocimetry", EXPERIMENTS IN FLUIDS ; EXPERIMENTAL METHODS AND THEIR APPLICATIONS TO FLUID FLOW, SPRINGER, BERLIN, DE, Bd. 41, Nr. 2, 30. Mai 2006 (2006-05-30), Seiten 161-171, XP019424833, ISSN: 1432-1114, DOI: DOI:10.1007/S00348-006-0154-5

• WIENEKE B: "Stereo-PIV using self-calibration on particle images", EXPERIMENTS IN FLUIDS ; EXPERIMENTAL METHODS AND THEIR APPLICATIONS TO FLUID FLOW, SPRINGER, BERLIN, DE, Bd. 39, Nr. 2, 1. August 2005 (2005-08-01), Seiten 267-280, XP019338232, ISSN: 1432-1114, DOI: DOI: 10.1007/S00348-005-0962-Z

• JUYANG WENG ET AL: "CAMERA CALIBRATION WITH DISTORTION MODELS AND ACCURACY EVALUATION", IEEE TRANSACTIONS ON PATTERN ANALYSIS AND MACHINE INTELLIGENCE, IEEE SERVICE CENTER, LOS ALAMITOS, CA, US, Bd. 14, Nr. 10, 1. Oktober 1992 (1992-10-01), Seiten 965-980, XP000328810, ISSN: 0162-8828, DOI: DOI:10.1109/34.159901

• SOLOFF S M ET AL: "Distortion compensation for generalized stereoscopic particle image velocimetry", MEASUREMENT SCIENCE AND TECHNOLOGY, IOP, BRISTOL, GB, Bd. 8, Nr. 12, 1. Dezember 1997 (1997-12-01), Seiten 1441-1454, XP020064379, ISSN: 0957-0233, DOI: DOI: 10.1088/0957-0233/8/12/008

• TSAI R Y: "A versatile camera calibration technique for high-accuracy 3D machine vision metrology using off-the-shelf TV cameras and lenses", IEEE JOURNAL OF ROBOTICS AND AUTOMATION USA, Bd. RA-3, Nr. 4, August 1987 (1987-08), Seiten 323-344, XP002633633, ISSN: 0882-4967

**Beschreibung**

Gebiet der Erfindung

Die Erfindung bezieht sich auf ein Verfahren zur Bestimmung eines Satzes von optischen Abbildungsfunktionen, die die Abbildung eines Messvolumens auf je eine aus einer Mehrzahl von Detektorflächen, auf welche das Messvolumen mittels einer Detektionsoptik unter jeweils verschiedenem Beobachtungswinkel abbildbar ist, beschreiben,
umfassend die Schritte:

> a) Durchführen einer Vorkalibrierung, bei der für jede Detektorfläche eine Zuordnung jeder Volumenposition im Messvolumen zu einer Bildposition auf der jeweiligen Detektorfläche ermittelt wird,
> b) zeitgleiches Abbilden des Messvolumens, in welchem eine Mehrzahl optisch detektierbarer Teilchen verteilt sind, auf die Detektorflächen,
> c) Ermitteln von Stützpositionen, nämlich der Volumenpositionen wenigstens einiger Teilchen, aus Bildpositionen von entsprechenden Teilchenbildern in den in Schritt b erzeugten Bildern des Messvolumens unter Anwendung eines Triangulationsverfahrens auf Basis der in Schritt a ermittelten Zuordnungen,
> d) Verfeinern der in Schritt a ermittelten Zuordnungen unter Verwendung der in Schritt c ermittelten Stützpositionen, sodass sich ein Satz verfeinerter Zuordnungen als Satz der zu bestimmenden Abbildungsfunktionen ergibt.

Die Erfindung bezieht sich weiter auf ein Verfahren zur Rekonstruktion eines Messvolumens mit einer Konstellation von optisch detektierbaren Teilchen anhand einer Mehrzahl zweidimensionale Bilder des Messvolumens, die mittels einer Detektionsoptik auf je einer Detektorfläche zeitgleich unter jeweils verschiedenem Beobachtungswinkel aufgenommen wurden.

Stand der Technik

Aus der DE 10 2006 055 746 A1 ist ein gattungsgemäßes Verfahren zur Bestimmung eines Satzes von Abbildungsfunktionen bekannt.

Derartige Abbildungsfunktionen finden insbesondere Verwendung bei optischen Verfahren zur Bestimmung eines dreidimensionalen Geschwindigkeitsfeldes eines strömenden Fluids in einem Messvolumen. Typische derartige Messverfahren sind dem Fachmann als PIV (Particle Imaging Velocimetry) oder PTV (Particle Tracking Velocimetry) bekannt. Bei beiden Verfahren lässt man ein Messvolumen von einem Fluid durchströmen, welches optisch detektierbare Teilchen mitführt. Typischerweise werden die Teilchen durch geeignete Beleuchtung zur Abstrahlung von Licht, z.B. Reflexion, Streuung, Fluoreszenz oder ähnliches, angeregt. Das ausgesandte Licht wird dann über eine geeignete Detektionsoptik zeitgleich mehreren flächigen Detektoren zugeführt, auf denen das Messvolumen abgebildet wird, d.h. es werden zeitgleich zweidimensionale Bilder des Messvolumens auf den Detektorflächen erzeugt. Die Detektoren "beobachten" das Messvolumen unter unterschiedlichen Beobachtungswinkeln. Üblicherweise weist jeder Detektor eine eigene Optik auf. Da die spezielle Ausgestaltung der Optik im Rahmen der vorliegenden Beschreibung jedoch keine Rolle spielt, wird hier der Begriff "die Detektionsoptik" zusammenfassend für jede optische Gesamtheit verwendet, mit der das Messvolumen auf die Detektorflächen abgebildet wird.

Je nach dem speziellen Messverfahren wird anhand der aufgenommenen Bilder die individuelle Teilchenkonstellation im Volumen (3D-PTV) oder eine voxelweise Intensitätsverteilung des Messvolumens (tomographische PIV; siehe z.B. EP 1 517 150 B1) rekonstruiert.

Die Bildaufnahme mit anschließender Rekonstruktion wird mindestens zweimal zu unterschiedlichen Messzeitpunkten durchgeführt. Ein Vergleich der Rekonstruktionen gibt Aufschluss über die strömungsbedingten Verschiebungen, die sich zwischen den beiden Messzeitpunkten ergeben haben. Zusammen mit der Kenntnis des zwischen den Messzeitpunkten verstrichenen Zeitintervalls lässt sich hieraus ein Geschwindigkeitsfeld rekonstruieren, welches die Strömung im Messvolumen repräsentiert.

Um anhand der aufgenommenen Bilder des Messvolumens die Teilchenkonstellation bzw. die voxelweise Intensitätsverteilung im Messvolumen rekonstruieren zu können, ist eine sehr genaue Kenntnis darüber erforderlich, wie eine Volumenposition im Messvolumen auf eine Bildposition auf einer Detektorfläche abgebildet wird. Dieser Zusammenhang wird durch die so genannte Abbildungsfunktion beschrieben. Insbesondere ordnet die Abbildungsfunktion jeder Volumenposition $(X,Y,Z)$ im Messvolumen eine Bildposition $(x_i, y_i)$ auf einer i-ten Detektorfläche zu. Typischerweise wird für jeden Detektor eine eigene Abbildungsfunktion formuliert, weshalb im Rahmen der vorliegenden Beschreibung von einem Satz von Abbildungsfunktionen gesprochen wird. Dies soll jedoch ausdrücklich auch Situationen umfassen, in denen die Einzeldetektor-Abbildungsfunktionen beispielsweise in Matrixschreibweise zu einer Gesamt-Abbildungsfunktion zusammengefasst werden.

Die Abbildungsfunktion ist typischerweise eindeutig, d.h. jeder Volumenposition im Messvolumen wird genau eine Bildposition auf der entsprechenden Detektorfläche zugeordnet. Die Umkehrung der Abbildungsfunktion ist jedoch in der Regel nicht eindeutig. Insbesondere werden alle Volumenpositionen auf der "Sichtlinie" ("line of sight") eines Detektors auf derselben Bildposition seiner Detektorfläche abgebildet. Die Umkehrung der Abbildungsfunktion weist somit einzelnen Bildpositionen der entsprechenden Detektorfläche eine ganze Gruppe von Volumenpositionen im Messvolumen zu.

Um dennoch zu einer eindeutigen Rekonstruktion zu gelangen, werden die Informationen mehrerer Bilder im Rahmen eines so genannten Triangulationsverfahrens gemeinsam ausgewertet.

Insbesondere können die Umkehrungen der Abbildungsfunktionen auf die Bilder eines individuell identifizierten Teilchens auf unterschiedlichen Detektorflächen angewendet werden. Als die Volumenposition des Teilchens kann dann diejenige Volumenposition bestimmt werden, die allen den Bildpositionen des Teilchens zugeordneten Gruppen von Volumenpositionen gemeinsam ist. Dies führt schon bei Verwendung von zwei Detektoren zu einem überbestimmten Ergebnis. Typischerweise werden jedoch drei und mehr Detektoren verwendet, sodass eine deutliche Überbestimmung vorliegt. Aufgrund von Messungenauigkeiten führt dies dazu, dass sich die aus den Teilchenbildern berechneten Sichtlinien der Detektoren nicht exakt in einem gemeinsamen Punkt schneiden. Dies ist die typische Situation, die sich insbesondere ergibt, wenn die Abbildungsfunktionen allein durch eine Grobkalibrierung z.B. mittels einer Kalibrierplatte bestimmt werden.

Die oben erwähnte gattungsbildende DE 10 2006 055 746 A1 schlägt zur Abhilfe eine Verfeinerung der Abbildungsfunktionen vor. Diese Art der Verfeinerung ist inzwischen in Fachkreisen unter dem Begriff "Volumen-Selbstkalibrierung" ("volume self-calibration") bekannt. Bei der Volumen-Selbstkalibrierung wird durch Triangulation die Volumenposition des Teilchens zunächst nur näherungsweise bestimmt. In Abhängigkeit von der relativen Lage der näherungsweise bestimmten Volumenposition zu den durch die Abbildungsfunktionen vorgegebenen Sichtlinien der Detektoren werden dann Korrekturfaktoren für die Abbildungsfunktionen berechnet. Anschließend wird eine erneute Triangulation mit den korrigierten Abbildungsfunktionen durchgeführt und die Volumenposition erneut näherungsweise bestimmt. Dieses Verfahren wird üblicherweise iterativ solange durchgeführt, bis geeignete Korrekturfaktoren für die Abbildungsfunktionen gefunden sind, um die Volumenposition des Teilchens mit hinreichender Genauigkeit, d.h. im Rahmen einer vorgegebenen Toleranz, zu bestimmen. Die solchermaßen ermittelten, verfeinerten Abbildungsfunktionen werden dem weiteren Verfahren - sei es im Rahmen eines PIV- oder eines PTV-Verfahrens - zugrunde gelegt.

Nachteilig bei dem bekannten Verfahren ist es, dass es zwar eine verbesserte geometrische Zuordnung von Volumenpunkten und Bildpunkten ergibt, andere Abbildungsfehler jedoch vollständig ignoriert werden. Insbesondere bleiben Abbildungsfehler, die durch Defokussierung, sphärische Aberration oder Astigmatismus der Detektionsoptik entstehen, völlig unberücksichtigt. Derartige Abbildungsfehler fallen umso mehr ins Gewicht, je größer das abgebildete Messvolumen ist. Insbesondere bei der strömungstechnischen Untersuchung größerer Bauteile können derartige Abbildungsfehler einen erheblichen Einfluss auf das Messergebnis haben.

Wieneke, B.: "Stero-PIV using self-calibration on particle images", Experiments in Fluid (2005), 39: 267-280 und Weng, J. et al.: "Camera Calibration with Distortion Models and Accuracy Evaluation", IEEE Transactions on Pattern Analysis and Machine Intelligence 14 (1992) October, No. 10, New York, US, die Kamera-Kalibrierungsverfahren für PIV-Technologie beschreiben, diskutieren optische Verzerrungen bzw. Linsenfehler, dies jedoch nur im Sinne von Positionsfehlern. Auch mit diesen Verfahren können weitergehende Abbildungsfehler nicht korrigiert werden.

Aufgabenstellung

Es ist die Aufgabe der vorliegenden Erfindung, ein gattungsgemäßes Verfahren derart weiterzubilden, dass komplexere Abbildungsfehler kompensiert werden können.

Darlegung der Erfindung

Diese Aufgabe wird in Verbindung mit den Merkmalen des Oberbegriffs von Anspruch 1 dadurch gelöst, dass ein Abbildungsfehler durch ein vorgegebenes Formmodell modelliert wird, derart, dass ein durch Formparameter parametrisiertes Formmodell derjenigen Form vorgegeben wird, mit der ein punktförmiges Teilchen im Messvolumen als Teilchenbild auf die Detektorflächen abgebildet würde und dass Schritt d des Verfeinerns der ermittelten Zuordnungen die Schritte umfasst:

d1) Bestimmen von Werten der Formparameter für die in Schritt c ermittelten Stützpositionen anhand der entsprechenden Teilchenbilder,

d2) Abschätzen von Werten der Formparameter für wenigstens die übrigen Volumenpositionen des Messvolumens durch Anwendung eines rechnerisches Anpassungsverfahren, das auf den in Schritt d1 für die Stützpositionen bestimmten Werten der Formparameter basiert,

d3) Ausgeben eines Satzes von Abbildungsfunktionen, die - für jede Detektorfläche - jeder Volumenposition des Messvolumens eine entsprechende Bildposition sowie die entsprechenden, in Schritt d2 abgeschätzten oder in Schritt d1 bestimmten Formparameterwerte zuordnen.

Zunächst sieht die Erfindung vor, dass der Abbildungsfehler durch ein vorgegebenes Formmodell modelliert wird. Dies bedeutet, dass ein Modell derjenigen Form vorgegeben wird, mit der ein punktförmiges Teilchen im Messvolumen auf der Detektorfläche abgebildet wird, wobei das Formmodell durch Formparameter gegeben ist, deren Werte von Volumenposition zu Volumenposition unterschiedlich sein können. Beispielsweise wird ein punktförmiges Teilchen auf der Detektorfläche als Beugungsscheibchen abgebildet, dessen Größe davon abhängt, wie weit das Teilchen aus der Fokalebene der Detektionsoptik versetzt ist. Entsprechend könnte das Formmodell als Kreisscheibe formuliert sein, wobei der Scheibendurchmesser als Formparameter von Volumenpunkt zu Volumenpunkt variiert.

Typischerweise sind die Abbildungsfehler jedoch komplexer, sodass auch eine komplexere Form des Formmodells angezeigt ist. Als günstig hat sich herausgestellt, dass das Formmodell einer Funktions-Ellipse, insbesondere einer Gauß- oder einer Airy-Ellipse entspricht. Als Funktions-Ellipse wird hier eine Ellipse mit entsprechend einer definierten Funktion verlaufenden Intensitätsverteilung bezeichnet. Im Fall der Gauß-Ellipse stelle man sich eine Intensitätsverteilung gemäß der Gaußschen Glockenkurve vor, wobei die Breite der Gaußglocke in Richtung einer maximalen Ausdehnung der Ellipse einen ersten Wert hat und senkrecht dazu einen zweiten Wert. Als Formparameter können die Länge der großen Ellipsenachse (z.B. repräsentiert durch den oben genannten, ersten Wert der Glockenbreite), die Länge der kleinen Ellipsenachse (z.B. repräsentiert durch den oben genannten zweiten Wert der Glockenbreite), der Ellipsenneigungswinkel und/oder eine Funktionsamplitude (z.B. der Amplitudenwert der Glocke) dienen. Analoges gilt für andere Funktions-Ellipsen, insbesondere für die Airy-Ellipse, die auf der bekannten Airy-Funktion basiert, oder für Funktions-Ellipsen, die auf z.B. auch ringförmige Teilchenabbildungen beschreibenden Funktionen basieren.

Weiter sieht die Erfindung vor, dass die Bilder der Teilchen nach Maßgabe des Formmodells untersucht und die Formparameterwerte bestimmt werden. Dies kann beispielsweise durch ein rechnerisches Anpassungsverfahren (Fitting) erfolgen, z.B. indem die Formparameterwerte solange variiert werden, bis die Abweichung zwischen dem Modell und der tatsächlichen Form des Teilchenbildes auf der Detektorfläche minimiert ist. Dieser Satz von Formparameterwerten kann dann der durch Triangulation bestimmten Volumenposition des Teilchens zugeordnet werden. Dies erfolgt für jeden Detektor sowie für eine Mehrzahl von Teilchen, vorzugsweise für alle abgebildeten Teilchen, wobei jedoch einander überlappende Teilchen aus der Berechnung eliminiert werden sollten.

Das Ergebnis dieses Schrittes ist eine Verteilung von Stützpunkten im Messvolumen, denen jeweils für jeden Detektor ein Satz Formparameterwerten zugeordnet ist. Volumenpositionen, an denen sich keine Teilchen befinden, die somit nicht identifizierbar abgebildet werden, entziehen sich naturgemäß dieser Art der Bestimmung der Formparameterwerten. Um auch zwischen den Stützpositionen Formparameterwerte zu erhalten, sieht die Erfindung weiter vor, die Formparameterwerte an Volumenpositionen zwischen den Stützpositionen und außerhalb davon durch ein rechnerisches Anpassungsverfahren (Fitting) zu ermitteln. Dieser Anpassung kann ein physikalisch, insbesondere optisch begründetes mathematisches Modell zugrunde gelegt werden. Es hat sich jedoch als zweckmäßig erwiesen, hier ein einfaches Polynom- oder Spline-Anpassungsverfahren zu wählen. Vorzugsweise ist darauf zu achten, dass es sich um ein statistisch robustes Verfahren handelt, das geeignet ist, sog. "Ausreißer" zu eleminieren.

Das Ergebnis dieses Schrittes ist, dass jeder Volumenposition - unabhängig ob Stützposition oder nicht - nunmehr für jeden Detektor ein Satz von Formparameterwerten zugeordnet ist, sei es ein abgeschätzter oder ein unmittelbar bestimmter Wertesatz.

Diese Sätze von Formparameterwerten werden schließlich in geeigneter Form (abhängig von der gewählten Gestalt des Formmodells) der bislang rein geometrischen Abbildungsfunktion hinzugefügt, insbesondere als zusätzlicher Faltungsterm. Diese verfeinerten Abbildungsfunktionen, die jeder Volumenposition im Messvolumen nicht nur eine reine Bildposition auf den Detektorflächen sondern auch eine Form, mit der ein punktförmiges Teilchen an der Volumenposition auf der Bildposition abgebildet würde, zuordnen, repräsentiert das Ergebnis des erfindungsgemäßen Verfahrens, somit die erfindungsgemäßen Abbildungsfunktionen.

Es sei angemerkt, dass für die Stützpositionen typischerweise zwei Sätze von Formparameterwerten alternativ verwendet werden können, nämlich die unmittelbar bestimmten oder diejenigen, die sich aus dem rechnerischen Anpassungsverfahren für die Stützpositionen ergeben. Sie sollten sich, abhängig von der Qualität des rechnerischen Anpassungsverfahrens, nur sehr geringfügig unterscheiden. Zur Vermeidung von Unstetigkeiten wird man typischerweise die abgeschätzten Parameterwerten den unmittelbar bestimmten vorziehen.

Wie beschrieben, unterscheidet sich die vorliegende Erfindung in der Ausgestaltung des Verfeinerungsschrittes vom gattungsgemäßen Stand der Technik. Die erfindungsgemäßen Schritte haben jedoch nicht zwangsläufig alternativ zur bekannten Volumen-Selbstkalibrierung zu erfolgen. Vielmehr ist es bei einer bevorzugten Ausführungsform der Erfindung vorgesehen, dass vor dem Bestimmen der Werte für die Formparameter die durch Triangulation ermittelten Stützpositionen durch Anwendung eines Volumen-Selbstkalibrierungsverfahrens korrigiert werden. Dies bedeutet mit anderen Worten, dass zunächst eine verfeinerte geometrische Abbildungsfunktion gemäß dem gattungsbildenden Stand der Technik ermittelt und diese anschließend durch die erfindungsgemäße Hinzufügung der Formparameter nochmals verfeinert wird.

Wie einleitend bereits erläutert, finden Abbildungsfunktionen insbesondere Anwendung bei der Rekonstruktion eines Messvolumens mit einer Konstellation von optisch detektierbaren Teilchen, insbesondere im Rahmen von Geschwindigkeitsfeldmessungen in Strömungen. Ein derartiges Verfahren mit den Merkmalen des Oberbegriffs von Anspruch 5 kann erfindungsgemäß verbessert werden durch einen Schritt des Vorgebens einer Ausgangskonstellation von Teilchen im Messvolumen,

sowie durch iteratives Anwenden der Schritte:

- Anwenden eines mit dem erfindungsgemäßen Verfahren bestimmten Satzes von Abbildungsfunktionen auf das Messvolumen mit der vorgegebenen Teilchenkonstellation zur Berechnung virtueller Bilder des Messvolumens,
- Vergleichen der virtuellen Bilder mit den aufgenommenen Bildern zur Ermittlung von Unterschieden zwischen den virtuellen und den aufgenommenen Bildern,
- Verändern der angenommenen Ausgangskonstellation in Abhängigkeit von den ermittelten Unterschieden,
wobei die Iteration so lange durchgeführt wird, bis die ermittelten Unterschiede zwischen den virtuellen und den aufgenommenen Bildern kleiner als eine vorgegebene Toleranz sind.

"Anwenden" der Abbildungsfunktion bedeutet dabei im Wesentlichen die Durchführung einer Faltung der Abbildungsfunktion mit der tatsächlichen Teilchengröße bzw. Voxelgröße (siehe unten). Bei optischen Anordnungen mit beugungsbegrenzter Auflösung, d.h. Anwendungen, bei denen die Teilchen im Verhältnis zum Auflösungsvermögen der Optik so klein sind, dass sie als "punktförmig" angenommen werden können, reduziert sich die die Faltung im wesentlichen auf eine Multiplikation.

Das erfindungsgemäße Rekonstruktionsverfahren sieht also im Wesentlichen die dem Fachmann grundsätzlich bekannte Volumenrekonstruktion unter Anwendung der erfindungsgemäß bestimmten Abbildungsfunktionen vor. Die Volumenrekonstruktion kann sich dabei, wie beim PTV-Verfahren in einer Rekonstruktion einer konkreten Teilchenkonstellation erschöpfen. Ebenso ist es auch möglich, wie beispielsweise beim tomographischen PIV-Verfahren das Messvolumen in eine Mehrzahl von Voxel zu unterteilen, das Anwenden des Satzes von Abbildungsfunktionen voxelweise erfolgen zu lassen und statt des Vorgebens einer Ausgangskonstellation von Teilchen im Messvolumen eine voxelweise Intensitätsverteilung im Messvolumen vorzugeben. Dieses Verfahren bietet sich insbesondere bei hohen Teilchendichten an, in denen für geringe Teilchendichten optimierte PTV-Verfahren nicht oder nur schlecht anwendbar ist.

Weitere Merkmale und Vorteile der Erfindung ergeben sich aus der nachfolgenden, speziellen Beschreibung sowie den Zeichnungen:

Kurzbeschreibung der Zeichnungen

In den Zeichnungen zeigen:

Figur 1: eine schematische Darstellung eines experimentellen Aufbaus zur Durchführung eines Messverfahrens, im Rahmen dessen das erfindungsgemäße Verfahren anwendbar ist;

Figur 2: eine Skizze zur Erläutung von Funktions-Ellipsen.

Detaillierte Beschreibung bevorzugter Ausführungsformen

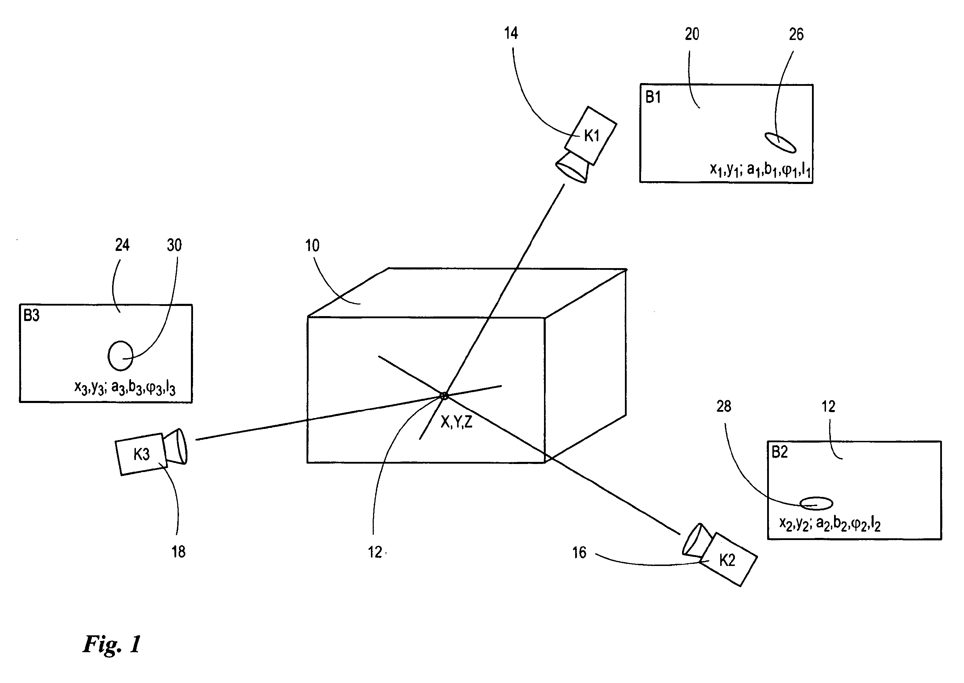

Figur 1 zeigt einen schematischen Aufbau, wie er typischerweise für ein dreidimensionales PTV- oder PIV-Verfahren verwendet werden kann. Ein Messvolumen 10 wird von einem nicht näher dargestellten Fluid durchströmt, welches mit optisch detektierbaren Partikeln, z.B. reflektierenden, streuenden oder fluoreszierenden Glas- oder Kunststoffperlen, beimpft ist. Der Übersichtlichkeit der Darstellung halber ist lediglich ein Teilchen 12 an der Volumenposition (X,Y,Z) im Messvolumen 10 dargestellt. Das Messvolumen 10 und insbesondere das Teilchen 12 wird von drei Detektoren 14, 16, 18, die beispielsweise als CCD-Kameras ausgebildet sind, aufgenommen. Der Vereinfachung der nachfolgenden Erläuterung halber sind die Detektoren 14, 16, 18 durchnummeriert und werden im Folgenden als Kameras K1, K2 und K3 bezeichnet. Wesentlich ist, dass die Detektoren 14, 16, 18 Flächendetektoren sind, d.h. eine lichtsensitive Detektorfläche aufweisen, auf der das Bild des Volumens und insbesondere das Teilchenbild des Teilchens 12 als zweidimensionale Projektion gespeichert wird. Derartige Bilder 20, 22, 24 sind in Figur 1 schematisch neben den jeweiligen Kameras dargestellt und der leichteren Zuordenbarkeit zu den jeweiligen Kameras halber mit B1, B2, B3 bezeichnet.

Durch die relativen Positionen der Detektoren 14, 16, 18 sowie die spezielle Ausgestaltung der Detektionsoptik, z.B. der Objektive der Kameras K1, K2, K3 erfolgt die Abbildung des Teilchens 12 von der Volumenposition (X,Y,Z) auf jeweils unterschiedliche Bildpositionen in den Bildern B1, B2 und B3. Diese Bildpositionen werden nachfolgend durch die Kleinbuchstaben x, y mit dem jeweiligen Index des zugehörigen Bildes bzw. der zugehörigen Kamera dargestellt. So wird das Teilchen 12 in dem von der Kamera K1 aufgenommen Bild B1 an der Bildposition $(x_1,y_1)$ dargestellt. Auf dem von der Kamera K2 aufgenommen Bild B2 wird das Teilchen 12 an der Bildposition $(x_2,y_2)$ abgebildet. In dem von der Kamera K3 aufgenommenen Bild B3 wird das Teilchen 12 an der Bildposition $(x_3,y_3)$ abgebildet. Die Bestimmung entsprechender Abbildungsfunktionen, die die Abbildung der Volumenposition (X,Y,Z) auf die Bildpositionen $(x_1,y_1)$, $(x_2,y_2)$ bzw. $(x_3,y_3)$ beschreibt, ist einschließlich besonderer geometrischer Verfeinerungsmethoden aus dem Stand der Technik bekannt.

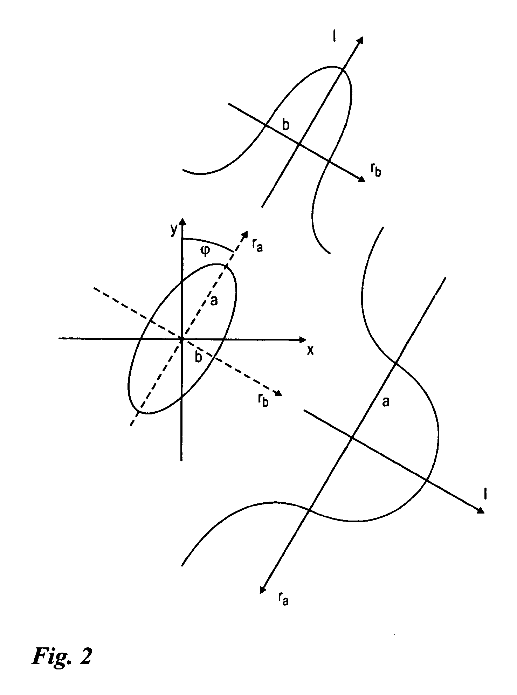

Die vorliegende Erfindung trägt zusätzlich dem Umstand Rechnung, dass, insbesondere bei großem Messvolumen 10, die Abbildung eines Teilchens 12 im Messvolumen 10 nicht zwingend zu einem punktförmigen Teilchenbild führt. Vielmehr kann das Teilchenbild aufgrund von Defokussierung, sphärischen Aberrationen und anderen Abbildungsfehlern eine Form aufweisen, die allgemein als "Beugungsscheibchen" bezeichnet wird. Derartige Beugungsscheibchen unterschiedlicher Ausprägung sind in Figur 1 zur schematischen Darstellung der Teilchenbilder verwendet. Insbesondere haben die Erfinder festgestellt, dass die Form der Beugungsscheibchen sehr gut als so genannte Funktions-Ellipsen beschreibbar ist. Zur Erläuterung des Begriffs der Funktions-Ellipse wird auf die nachfolgend näher diskutierte Figur 2 verwiesen. Die Funktions-Ellipsen 26, 28, 30 lassen sich durch einen Satz von Formparametern charakterisieren. Dies bedeutet, dass die Form der Beugungsscheibchen stets nach demselben, mittels der Formparameter parametrisierten Modell angenommen werden, wobei im Einzelfall jedoch die Werte der Formparameter zu bestimmen sind. Insbesondere hängen die Werte der Formparameter von der jeweils abgebildeten Volumenposition im Messvolumen 10 ab. Weiter hängen die Formparameter auch von der relativen Lage der Detektoren 14, 16, 18 sowie der verwendeten Detektionsoptik ab. Die Erfindung sieht daher vor, die Werte der Formparameter für jede Volumenposition im Messvolumen 10 zu bestimmen und eine rein geometrische Abbildungsfunktion, welche dieser Volumenposition eine Bildposition zuordnet, um diese Formparameterwerte zu ergänzen, so dass jeder Volumenposition eine Bildposition und eine durch die Formparameterwerte vorgegebene Bildform zugeordnet wird. Dies erfolgt separat für jeden Detektor.

Bei der dargestellten Ausführungsform werden, wie nachfolgend im Zusammenhang mit Figur 2 näher erläutert, als Formparameter die Parameter a, b, $\varphi$ und I verwendet. Mit anderen Worten wird der Volumenposition (X,Y,Z) für die Abbildung mittels der ersten Kamera K1 im Bild B1 neben der Bildposition (x1,y1) auch die durch den Formparameter-Wertesatz (a1,b1,$\varphi$1,l1) definierte Form zugeordnet. Für die Abbildung mittels der zweiten Kamera K2 wird der Volumenposition (X,Y,Z) im Bild B2 neben der Bildposition (x2,y2) auch die durch den Formparameter-Wertesatz (a2,b2,$\varphi$2,l2) definierte Form zugeordnet. Entsprechend wird der Volumenposition (X,Y,Z) in dem von der dritten Kamera K3 aufgenommene Bild B3 neben der Bildposition (x3,y3) auch die durch den Formparameter-Wertesatz (a3,b3,$\varphi$3,l3) definierte Form zugeordnet.

Figur 2 zeigt eine Skizze zur Erläuterung des Begriffs der Funktions-Ellipse. Als Beispiel sei eine 2D-Gauß-Ellipse gegeben. Diese hat die Form:

$$f_{2D\text{-}Gauss}(x',y') = I \exp\left[-\frac{1}{2}\left(\frac{x'^2}{a^2} + \frac{y'^2}{b^2}\right)\right],$$

mit

$$x' = x\cos\varphi + y\sin\varphi$$
$$y' = y\cos\varphi - x\sin\varphi \qquad,$$

wobei I die Höhe der Glockenkurve am Nullpunkt, a bzw. b die Halbwertsbreite der Glockenkurve, x und y die zweidimensionalen Raumkoordinaten und $\varphi$ den Verkippungswinkel der 2D-Gauß-Ellipse gegenüber dem x/y-Koordinatensystem darstellen. Die Annahme eines Teilchenbildes als Gauß-Ellipse bedeutet, dass angenommen wird, ein punktförmiges Teilchen im Messvolumen werde auf ein Beugungsscheibchen im Bild abgebildet, welches einen elliptischen Umriss hat und dessen Intensität entlang der langen sowie der kurzen Ellipsenachse ein Gaußprofil zeigt. Natürlich hat ein solches Beugungsscheibchen keinen scharfen Umriss sondern zeigt eine asymptotisch gegen Null laufende Intensität. Um ein eindeutiges Formmodell zu definieren, bedarf es daher bestimmter Ersatzwerte. Hier kann beispielsweise die Halbwertsbreite der jeweiligen Gauß-Glocke als Länge der jeweiligen Ellipsenachse a bzw. b definiert werden. Selbstverständlich sind auch andere Definitionen möglich.

Obgleich sich das Formmodell der oben beschriebenen Gauß-Ellipse als besonders vorteilhaft erwiesen hat, sind auch andere Funktions-Ellipsen oder allgemeiner andere Formmodelle denkbar. Ebenfalls günstig ist die Verwendung einer Airy-Ellipse, wobei die Gauß-Funktion durch die bekannte Airy-Funktion ersetzt wird.

Zur Bestimmung der Formparameterwerte für jede Volumenposition (X,Y,Z) wird zunächst eine zeitgleiche Aufnahme des mit Teilchen beimpften Volumens mittels aller drei Detektoren 14, 16, 18 gemacht. Es resultieren zeitgleich aufgenommene Bilder B1, B2 und B3. Mittels bekannter Triangulation und ggf. zusätzlicher, geometrischer Verfeinerungen der Triangulation werden anhand der Teilchenbildern an den Positionen (x1,y1), (x2,y2) und (x3,y3) die Volumenpositionen (X,Y,Z) der Teilchen möglichst genau bestimmt. Alsdann wird das vorgegebene Formmodell auf die Teilchenbilder angewendet. Das bedeutet, dass die Formparameterwerte solange variiert werden, bis eine möglichst große Übereinstimmung zwischen der mittels des Formmodells berechneten Form des Beugungsscheibchens mit dem aufgenommenen Beugungsscheibchen übereinstimmt. Dabei sollten statistisch robuste Verfahren, die in der Lage sind, Ausreißer zu eliminieren, zum Einsatz kommen. Dies erfolgt in jedem der Bilder B1, B2 und B3. Aus den entsprechenden Formparameterwerten und den zugehörigen Bildpositions-Koordinaten wird dann für jede Teilchenposition die verfeinerte Abbildungsfunktion formuliert, die sowohl den Abbildungsort als auch die Abbildungsform für das entsprechende Teilchen auf den drei Bildern B1, B2 und B3 definiert. Diese Parameterwerte werden alsdann als Stützstellen für die Schätzung der Parameterwerte für die nicht mit Teilchen belegten Volumenposition des Messvolumens verwendet. Dem Fachmann sind eine Reihe von mathematischen Anpassungsverfahren (Fit-Verfahren) bekannt, wobei ein einfaches Polynom-Anpassungsverfahren sich als durchaus tauglich erwiesen hat. Selbstverständlich können auch andere Anpassungsverfahren verwendet werden, die beispielsweise ein physikalisch begründetes Modell des Verlaufs bestimmter Formparameter beschreiben.

Die solchermaßen bestimmten, verfeinerten Abbildungsfunktionen können im Rahmen typischer PTV- oder PIV-Verfahren in derselben Weise verwendet werden, wie die bereits bekannten, rein geometrischen Abbildungsfunktionen. Eine entsprechende weitergehende Erläuterung erübrigt sich daher an dieser Stelle.

Natürlich stellen die in der speziellen Beschreibung diskutieren und in den Figuren gezeigten Ausführungsformen nur illustrative Ausbildungsbeispiele der vorliegenden Erfindung dar. Dem Fachmann ist im Lichte der hiesigen Offenbarung ein breites Spektrum an Variationsmöglichkeiten anhand gegeben. Insbesondere kann die Wahl des Formmodells und die spezielle Gestalt der Formparameter an die Besonderheiten des Einzelfalles, insbesondere die speziellen Eigenschaften der Detektionsoptik angepasst werden. Beispielsweise könnte statt der bevorzugten Gauss- oder Airy-Ellipsen auch eine Poisson-Ellipse o.ä. verwendet werden.

Bezugszeichenliste

10    Messvolumen

12    Teilchen

14    Detektor

16    Detektor

18    Detektor

20    Bild

22    Bild

24    Bild

26    Beugungsscheibchen

28    Beugungsscheibchen

30    Beugungsscheibchen

**Patentansprüche**

**1.**    Verfahren zur Bestimmung eines Satzes von optischen Abbildungsfunktionen, die die Abbildung eines Messvolumens (10) auf je eine aus einer Mehrzahl von Detektorflächen, auf welche das Messvolumen (10) mittels einer Detektionsoptik unter jeweils verschiedenem Beobachtungswinkel abbildbar ist, beschreiben, umfassend die Schritte:

a) Durchführen einer Vorkalibrierung, bei der für jede Detektorfläche eine Zuordnung jeder Volumenposition (X,Y,Z) im Messvolumen (10) zu einer Bildposition $(x_i,y_i)$ auf der jeweiligen Detektorfläche ermittelt wird,
b) zeitgleiches Abbilden des Messvolumens (10), in welchem eine Mehrzahl optisch detektierbarer Teilchen (12) verteilt sind, auf die Detektorflächen,
c) Ermitteln von Stützpositionen, nämlich der Volumenpositionen (X,Y,Z) wenigstens einiger Teilchen (12), aus entsprechenden Bildpositionen $(x_i,y_i)$ von Teilchenbildern in den in Schritt b erzeugten Bildern (20, 22, 24) des Messvolumens (10) unter Anwendung eines Triangulationsverfahrens auf Basis der in Schritt a ermittelten Zuordnungen,
d) Verfeinern der in Schritt a ermittelten Zuordnungen unter Verwendung der in Schritt c ermittelten Stützpositionen, sodass sich ein Satz verfeinerter Zuordnungen als Satz der zu bestimmenden Abbildungsfunktionen ergibt,

**dadurch gekennzeichnet,**
**dass** ein Abbildungsfehler durch ein vorgegebenes Formmodell modelliert wird, derart, dass ein durch Formparameter $(a,b,\varphi,l)$ parametrisiertes Formmodell derjenigen Form vorgegeben wird, mit der ein punktförmiges Teilchen (12) im Messvolumen (10) als Teilchenbild auf die Detektorflächen abgebildet würde und dass Schritt d des Verfeinerns der ermittelten Zuordnungen die Schritte umfasst:

d1) Bestimmen von Werten der Formparameter $(a_i,b_i,\varphi_i,l_i)$ für die in Schritt c ermittelten Stützpositionen anhand der entsprechenden Teilchenbilder,
d2) Abschätzen von Werten der Formparameter $(a_i,b_i,\varphi_i,l_i)$ für alle Volumenpositionen (X,Y,Z) des Messvolumens (10) durch Anwendung eines rechnerisches Anpassungsverfahren, das auf den in Schritt d1 für die Stützpositionen bestimmten Werten der Formparameter $(a,b,\varphi,l)$ basiert,
d3) Ausgeben eines Satzes von Abbildungsfunktionen, die - für jede Detektorfläche - jeder Volumenposition (X,Y,Z) des Messvolumens (10) eine entsprechende Bildposition $(x_i,y_i)$ sowie die entsprechenden, in Schritt d2 abgeschätzten oder in Schritt d1 bestimmten Formparameterwerte $(a_i,b_i,\varphi_i,l_i)$ zuordnen.

**2.** Verfahren nach Anspruch 1,
**dadurch gekennzeichnet,**
**dass** das Formmodell einer Funktions-Ellipse, insbesondere einer 2D-Gauß- oder einer Airy-Ellipse entspricht und die Formparameter die Länge der kleinen Ellipsenachse (a), die Länge der großen Ellipsenachse (b), den Ellipsenneigungswinkel ($\varphi$) und/oder eine Funktionsamplitude (I) repräsentieren.

**3.** Verfahren nach einem der vorangehenden Ansprüche,
**dadurch gekennzeichnet,**
**dass** das rechnerische Anpassungsverfahren in Schritt d2 ein Polynom- oder Spline-Anpassungsverfahren ist.

**4.** Verfahren nach einem der vorangehenden Ansprüche,
**dadurch gekennzeichnet,**
**dass** vor dem Bestimmen der Werte für die Formparameter ($a_i,b_i,\varphi_i,I_i$) in Schritt d1 die in Schritt c durch Triangulation ermittelten Stützpositionen durch Anwendung eines Volumen-Selbstkalibrierungsverfahrens korrigiert werden.

**5.** Verfahren zur Rekonstruktion eines Messvolumens (10) mit einer Konstellation von optisch detektierbaren Teilchen (12) anhand einer Mehrzahl von zweidimensionalen Bildern (20, 22, 24) des Messvolumens (10), die mittels einer Detektionsoptik je einer Detektorfläche zeitgleich unter jeweils verschiedenem Beobachtungswinkel aufgenommen wurden, **gekennzeichnet durch**
einen Schritt des Vorgebens einer Ausgangskonstellation von Teilchen (12) im Messvolumen (10), sowie **durch** iteratives Anwenden der Schritte:

- Anwenden eines gemäß einem der Ansprüche 1 bis 4 bestimmten Satzes von Abbildungsfunktionen auf das Messvolumen (10) mit der vorgegebenen Teilchenkonstellation zur Berechnung virtueller Bilder des Messvolumens (10),
- Vergleichen der virtuellen Bilder mit den aufgenommenen Bildern zur Ermittlung von Unterschieden zwischen den virtuellen und den aufgenommenen Bildern,
- Verändern der angenommenen Ausgangskonstellation in Abhängigkeit von den ermittelten Unterschieden,

wobei die Iteration so lange durchgeführt wird, bis die ermittelten Unterschiede zwischen den virtuellen und den aufgenommenen Bildern kleiner als eine vorgegebene Toleranz sind oder bis eine vorgegebene Anzahl von Iterationsschleifen durchlaufen ist.

**6.** Verfahren zur Rekonstruktion eines Messvolumens (10) mit einer Konstellation von optisch detektierbaren Teilchen (12) anhand einer Mehrzahl von zweidimensionalen Bildern (20, 22, 24) des Messvolumens (10), die mittels einer Detektionsoptik je einer Detektorfläche zeitgleich unter jeweils verschiedenem Beobachtungswinkel aufgenommen wurden, **gekennzeichnet durch**
einen Schritt des Vorgebens einer Ausgangs-Intensitätsverteilung in dem in eine Mehrzahl von Voxeln unterteilten Messvolumen (10),
sowie **durch** iteratives Anwenden der Schritte:

- Anwenden eines gemäß einem der Ansprüche 1 bis 4 bestimmten Satzes von Abbildungsfunktionen auf das Messvolumen (10) mit der vorgegebenen Intensitätsverteilung zur Berechnung virtueller Bilder des Messvolumens (10),
- Vergleichen der virtuellen Bilder mit den aufgenommenen Bildern zur Ermittlung von Unterschieden zwischen den virtuellen und den aufgenommenen Bildern,
- Verändern der angenommenen Ausgangs-Intensitätsverteilung in Abhängigkeit von den ermittelten Unterschieden,

wobei die Iteration so lange durchgeführt wird, bis die ermittelten Unterschiede zwischen den virtuellen und den aufgenommenen Bildern kleiner als eine vorgegebene Toleranz sind oder bis eine vorgegebene Anzahl von Iterationsschleifen durchlaufen ist.

**7.** Verfahren nach Anspruch 6,
**dadurch gekennzeichnet,**
**dass** die Ausgangs-Intensitätsverteilung eine gleiche Intensität in allen Voxeln des Messvolumens annimmt.

**Claims**

**1.** A method for determining a set of optical imaging functions which each describe the imaging of a measuring volume (10) onto one of a plurality of detector surfaces on which the measuring volume (10) can be imaged at in each case a different observation angle by means of detector optics, comprising the steps:

a) performing pre-calibration, during which for each detector surface the assignment of each volume position (X, Y, Z) in the measuring volume (10) to an image position ($x_i$, $y_i$) on the respective detector surface is determined,
b) simultaneous imaging of the measuring volume (10), in which a plurality of optically detectable particles (12) are distributed, on the detector surfaces,
c) determining of support positions, namely of the volume positions (X, Y, Z) of at least a few particles (12), from corresponding image positions $(x_i, y_i)$ of particle images in the images (20, 22, 24) of the measuring volume (10) generated in step b by application of a triangulation method based upon the assignments determined in step a,

d) improving the assignments determined in step a by using the support positions determined in step c, so that a set of improved assignments results as a set of the imaging functions to be determined,

**characterized in that**

an imaging error is modeled by a predetermined shape model such that a shape model, parameterized by shape parameters (a, b, φ, I) and having the shape with which a punctiform particle (12) in the measuring volume (10) would be imaged as a particle image onto the detector surfaces, is predetermined,

and **in that** step d of improving the determined assignments comprises the steps:

d1) determining of values of the shape parameters (a, b, φ, I) for the support positions determined in step c, using the corresponding particle images,

d2) estimating of values of the shape parameters (a, b, φ, I) for all volume positions (X, Y, Z) of the measuring volume (10) by application of a mathematical adaptation method based upon the values of the shape parameters (a, b, φ, I) determined in step d1 for the support positions,

d3) issuance of a set of imaging functions which, for each detector surface, assign to each volume position (X, Y, Z) of the measuring volume (10) a corresponding image position $(x_i, y_i)$ as well as the corresponding shape parameter values $(a_i, b_i, φ_i, I_i)$ estimated in step d2 or determined in step d1.

2. A method according to Claim 1,
   **characterized in that**
   the shape model corresponds to a function ellipse, in particular a two-dimensional Gaussian ellipse or an Airy ellipse, and the shape parameters represent the length of the small ellipse axis (a), the length of the large ellipse axis (b), the ellipse inclination angle (φ) and/or a functional amplitude (I).

3. A method according to either of the preceding claims,
   **characterized in that**
   the mathematical adaptation method in step d2 is a polynomial or spline fit method.

4. A method according to any of the preceding claims,
   **characterized in that**

prior to determining the values for the shape parameters $(a_i, b_i, φ_i, I_i)$ in step d1, the support positions determined by triangulation in step c are corrected by application of a volume self-calibration method.

5. A method for reconstructing a measuring volume (10) with a constellation of optically detectable particles (12) using a plurality of two-dimensional images (20, 22, 24) of the measuring volume (10), which were simultaneously taken, each by means of a detector optics of a respective detector surface at a different observation angle, **characterized by**
   a step involving the pre-setting of an initial constellation of particles (12) in the measuring volume (10), as well as by iterative application of the steps:

   - application of a set of imaging functions, determined according to any of Claims 1 to 4, to the measuring volume (10) with the predetermined particle constellation for the calculation of virtual images of the measuring volume (10),
   - comparison of the virtual images with the recorded images, for determining differences between the virtual images and the recorded ones,
   - changing of the assumed initial constellation depending on the differences determined,

   with the iteration being continued until the differences determined between the virtual images and the recorded images are smaller than a predetermined tolerance or until a predetermined number of iteration loops has been passed through.

6. A method for reconstructing a measuring volume (10) with a constellation of optically detectable particles (12) using a plurality of two-dimensional images (20, 22, 24) of the measuring volume (10), which were simultaneously taken, each by means of a detector optics of a respective detector surface at a different observation angle,
   **characterized by**
   a step involving the pre-setting of an initial intensity distribution in the measuring volume (10), which is subdivided into a plurality of voxels, as well as by iterative application of the steps:

   - applying a set of imaging functions, determined according to any of Claims 1 to 4, to the measuring volume (10) with the predetermined intensity distribution for the calculation of virtual images of the measuring volume (10),
   - comparing the virtual images with the images recorded, for determining differences between the virtual images and the recorded images,
   - changing of the assumed initial intensity distribution depending on the differences determined,

with the iteration being continued until the differences determined between the virtual images and the ones recorded are smaller than a predetermined tolerance or until a predetermined number of iteration loops has been passed through.

**7.** A method according to Claim 6,
**characterized in that**
the initial intensity distribution assumes the same intensity in all voxels of the measuring volume.

## Revendications

**1.** Procédé de détermination d'un jeu de fonctions de reproduction optiques qui décrivent la reproduction d'un volume à mesurer (10) sur une surface respective d'une pluralité de surfaces de détection sur laquelle le volume à mesurer (10) peut être reproduit au moyen d'une optique de détection sous un angle d'observation chaque fois différent, comprenant les étapes suivantes :

a) exécution d'un pré-étalonnage lors duquel on définit, pour chaque surface de détection, une association de chaque point (X, Y, Z) dans le volume à mesurer (10) à un point d'image ($x_i$, $y_i$) sur la surface de détection respective,
b) reproduction isochronique, sur les surfaces de détection, du volume à mesurer (10) dans lequel sont réparties une pluralité de particules optiquement détectables (12),
c) détermination de points d'appui, à savoir les points de volume (X, Y, Z) d'au moins quelques particules (12), à partir de points d'image correspondants ($x_i$, $y_i$) d'images de particules dans les images (20, 22, 24) du volume à mesurer (10) produites à l'étape b, en appliquant une méthode de triangulation sur la base des associations déterminées à l'étape a,
d) affinement des associations déterminées à l'étape a en utilisant les points d'appui déterminés à l'étape c, de sorte qu'on obtient un jeu d'associations affinées comme jeu de fonctions de reproduction à déterminer,

**caractérisé en ce qu'**une aberration est modélisée par un modèle de forme prédéfini, de telle sorte qu'est prédéfini un modèle de forme, paramétré par des paramètres de forme (a, b, $\varphi$, I), de la forme avec laquelle une particule ponctuelle (12) dans le volume à mesurer (10) serait reproduite sous forme d'image de particule sur les surfaces de détection, et **en ce que** l'étape d'affinement des associations déterminées comprend les étapes suivantes :

d1) détermination de valeurs des paramètres de forme ($a_i$, $b_i$, $\varphi_i$, $l_i$) pour les points d'appui déterminés à l'étape c, à l'aide des images partielles correspondantes,
d2) estimation de valeurs des paramètres de forme ($a_i$, $b_i$, $\varphi_i$, $l_i$) pour tous les points (X, Y, Z) du volume à mesurer (10), en appliquant une méthode de calcul adaptative qui se fonde sur les valeurs des paramètres de forme (a, b, $\varphi$, I) déterminées à l'étape d1 pour les points d'appui,
d3) édition d'un jeu de fonctions de reproduction qui - pour chaque surface de détection - associent à chaque point (X, Y, Z) du volume à mesurer (10) un point d'image correspondant ($x_i$, $y_i$) ainsi que les valeurs correspondantes de paramètres de forme ($a_i$, $b_i$, $\varphi_i$, $l_i$) estimées à l'étape d2 ou déterminées à l'étape d1.

**2.** Procédé selon la revendication 1, **caractérisé en ce que** le modèle de forme correspond à une ellipse fonctionnelle, en particulier une ellipse de Gauss à 2 dimensions ou une Ellipse d'Airy, et que les paramètres de forme représentent la longueur du petit axe de l'ellipse (a), la longueur du grand axe de l'ellipse (b), l'angle d'inclinaison de l'ellipse ($\varphi$) et/ou une amplitude de fonction (I).

**3.** Procédé selon l'une quelconque des revendications précédentes, **caractérisé en ce que** la méthode de calcul adaptative de l'étape d2 est une méthode adaptative polynomiale ou par spline.

**4.** Procédé selon l'une quelconque des revendications précédentes, **caractérisé en ce que**, avant de déterminer les valeurs pour les paramètres de forme ($a_i$, $b_i$, $\varphi_i$, $l_i$) à l'étape d1, les points d'appui déterminés par triangulation à l'étape c sont corrigés par une méthode d'auto-étalonnage de volume.

**5.** Procédé de reconstruction d'un volume à mesurer (10) avec une constellation de particules optiquement détectables (12), à l'aide d'une pluralité d'images à deux dimensions (20, 22, 24) du volume à mesurer (10) qui ont été enregistrées isochroniquement au moyen d'une optique de détection d'une surface de détection respective sous un angle d'observation chaque fois différent,
**caractérisé**
**par** une étape consistant à prédéfinir une constellation initiale de particules (12) dans le volume à mesurer (10),
ainsi que par l'application itérative des étapes suivantes:

- application d'un jeu, déterminé selon l'une quelconque des revendications 1 à 4, de fonctions de reproduction sur le volume à mesurer (10) avec la constellation prédéfinie de particules, afin de calculer des images virtuelles du volume à mesurer (10),

- comparaison des images virtuelles avec les images enregistrées, afin de déterminer des différences entre les images virtuelles et les images enregistrées,
- modification de la constellation initiale supposée en fonction des différences déterminées,

sachant que l'itération est effectuée jusqu'à ce que les différences déterminées entre les images virtuelles et les images enregistrées soient inférieures à une tolérance prédéfinie, ou jusqu'à ce qu'un nombre prédéfini de boucles d'itération soit parcouru.

6. Procédé de reconstruction d'un volume à mesurer (10) avec une constellation de particules optiquement détectables (12), à l'aide d'une pluralité d'images à deux dimensions (20, 22, 24) du volume à mesurer (10) qui ont été enregistrées isochroniquement au moyen d'une optique de détection d'une surface de détection respective sous un angle d'observation chaque fois différent,
**caractérisé**
**par** une étape consistant à prédéfinir une répartition d'intensités initiale dans le volume à mesurer (10) subdivisé en une pluralité de voxels,
ainsi que par l'application itérative des étapes suivantes:

- application d'un jeu, déterminé selon l'une quelconque des revendications 1 à 4, de fonctions de reproduction sur le volume à mesurer (10) avec la répartition d'intensités prédéfinie, afin de calculer des images virtuelles du volume à mesurer (10),
- comparaison des images virtuelles avec les images enregistrées, afin de déterminer des différences entre les images virtuelles et les images enregistrées,
- modification de la répartition d'intensités initiale supposée en fonction des différences déterminées,

sachant que l'itération est effectuée jusqu'à ce que les différences déterminées entre les images virtuelles et les images enregistrées soient inférieures à une tolérance prédéfinie, ou jusqu'à ce qu'un nombre prédéfini de boucles d'itération soit parcouru.

7. Procédé selon la revendication 6, **caractérisé en ce que** la répartition d'intensités initiale suppose une intensité identique dans tous les voxels du volume à mesurer.

*Fig. 1*

*Fig. 2*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006055746 A1

- EP 1517150 B1

**In der Beschreibung aufgeführte Nicht-Patentliteratur**

- **WIENEKE, B.** Stero-PIV using self-calibration on particle images. *Experiments in Fluid,* 2005, vol. 39, 267-280

- **WENG, J. et al.** Camera Calibration with Distortion Models and Accuracy Evaluation. *IEEE Transactions on Pattern Analysis and Machine Intelligence,* Oktober 1992, vol. 14 (10